# EUROPEAN PATENT SPECIFICATION

(11) **EP 0 385 246 B1**
(45) Date of publication and mention of the grant of the patent: **27.04.1994**
(21) Application number: 90103317.5
(22) Date of filing: 21.02.1990
(51) Int. Cl.: C10G 11/05

(54) **Catalytic cracking**
Katalytisches Cracken
Craquage catalytique

(30) Priority: 02.03.1989 US 318099
(43) Date of publication of application: 05.09.1990
(73) Proprietor: W.R. Grace & Co.-Conn., New York, New York 10036 (US)
(72) Inventor: Cheng, Wu-Cheng, Columbia, MD 21044 (US); Rajagopalan, Kuppuswamy, Columbia, MD 21045 (US)
(74) Representative: UEXKÜLL & STOLBERG

(56) References cited:
- US-A- 3 312 615
- US-A- 3 718 553
- PATENT ABSTRACTS OF JAPAN, vol. 10, no. 144 (C-349)[2201], 27th May 1986.

## Description

The present invention relates to catalytic cracking, and more specifically to catalytic cracking compositions and processes that may be used to catalytically convert high molecular weight nickel-containing feedstocks into valuable lower molecular weight products.

It is generally known that catalytic cracking catalysts which comprise zeolites such as synthetic faujasite and ZSM-5 dispersed in an inorganic oxide matrix such as silica/alumina hydrogel, sols and clay may be used to economically convert heavy hydrocarbon feedstocks such as gas-oils and/or resid into gasoline and diesel fuel.

More recently it has been disclosed that the addition of aluminas to cracking catalysts compositions will improve the overall performance of the catalyst particularly when used to process feedstocks that contain significant quantities of sulfur and/or contaminant metals such as vanadium and nickel.

Canadian patent 1,117,511 describes FCC catalysts which contain free alumina hydrate, particularly alpha-alumina hydrate (boehmite) may be used to catalytically crack hydrocarbons that contain sulfur and/or metals including nickel and vanadium.

Japanese Patent Publication 84/1088 discloses catalytic cracking catalysts which contain aluminas such as Bayer Process aluminas (gibbsite), rho, and bayerite that are particularly effective for reducing the production of coke and hydrogen when used to process hydrodesulfurised Kuwait vacuum gas-oil.

US Patent 4,010,116 discloses FCC catalysts which contain pseudo-boehmite aluminas that may contain crystalline trihydrate components such as bayerite, and gibbsite.

US-A-3 718 553 discloses a cracking catalyst composition consisting of a crystalline alumino silicate having an exchangeable sodium content of less than 4 % by weight, which catalyst has impregnated thereon a controlled amount of nickel, iron or vanadium in an amount of 100 to 1000 ppm.

US Patent 3,312,615 discloses the use of eta alumina in the preparation of FCC catalysts.

While it is recognized that aluminas including bayerite, eta, pseudoboehmite and gibbsite may be added to catalytic cracking catalysts to improve the stability and coke/dry gas selectivity thereof, the industry has not fully developed catalytic cracking catalysts compositions and processes wherein nickel containing feedstocks may be economically processed.

It is therefore an object of the present invention to provide an improved catalytic cracking composition and process for converting nickel containing hydrocarbon feedstocks to more valuable low molecular weight products such as gasoline and diesel fuel.

It is a further object to provide a catalytic cracking process wherein hydrocarbon feedstocks containing in excess of about 10 ppm nickel may be economically processed in conventional FCC units.

It is a further object to provide an improved alumina containing FCC catalyst composition which can tolerate large quantities of nickel without producing unacceptable quantities of coke and hydrogen.

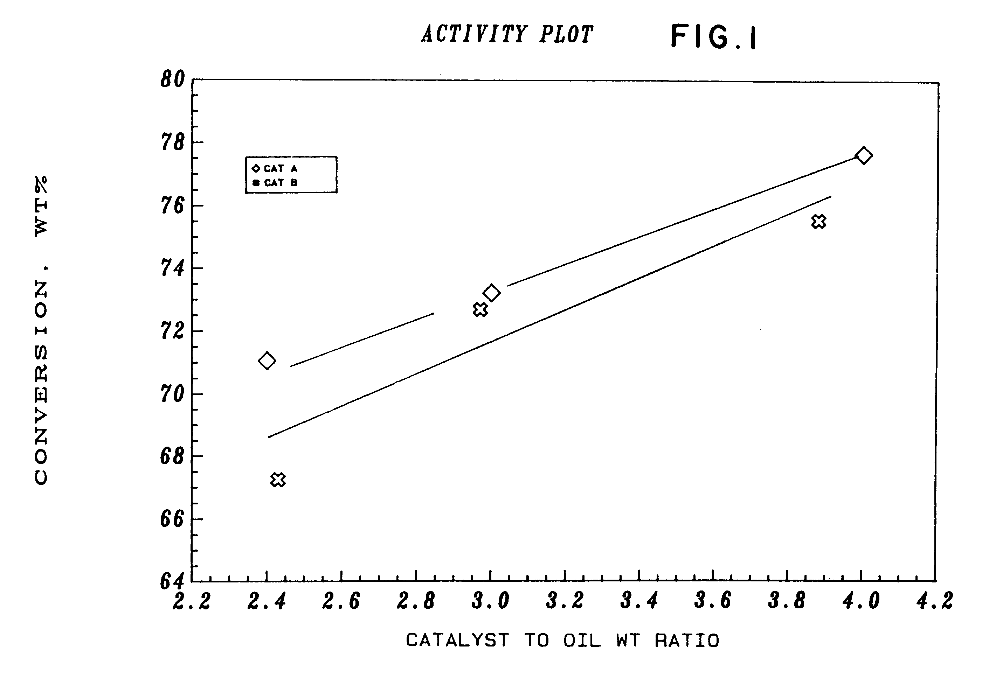

These and additional objects of the invention will become readily apparent to one skilled in the art from the following detailed description, specific examples and drawings wherein; figures 1, 2, and 3 are graphic plots of data obtained during the evaluation of catalysts of the prior art and catalysts of the present invention.

Broadly our invention contemplates catalytic cracking catalysts compositions that contain bayerite and/or eta alumina and the use thereof to process nickel containing hydrocarbon feedstocks.

More specifically, we have discovered that catalyst compositions containing certain type of aluminas (bayerite and/or eta alumina) are more effective for the cracking of Ni containing feedstock than compositions containing other types of aluminas (e.g. pseudoboehmite, gibbsite). We have found that if from about 2 to 40 wt.% bayerite and/or eta alumina is added to zeolite containing catalytic cracking catalysts, the catalysts may be used in the catalytic cracking of nickel containing feedstocks until the amount of nickel deposited on the catalysts reaches about 5000 ppm and in some instances as high as 8000 ppm.

Catalysts which may be used in the practice of our invention typically contain crystalline alumino-silicate zeolites such as synthetic faujasite i.e. type Y zeolite, type X zeolite, Zeolite Beta, ZSM-5, as well as heat treated (calcined) and/or rare-earth exchange derivatives thereof. Zeolites which are particularly suited include calcined rare-earth exchanged type Y zeolite (CREY) the preparation of which is disclosed in US patent 402,996, ultrastable type Y zeolite (USY) as disclosed in US patent 3,293,192 as well as various partially exchanged type Y zeolites as disclosed in US patents 3,607,043 and 3,676,368. The catalysts may also contain molecular sieves such as SAPO and ALPO as disclosed in US patent 4,764,269.

The catalysts compositions will include from about 5 to 50 wt.% molecular sieve, about 2 to 40 wt.% bayerite and/or eta alumina, and the balance will comprise inorganic oxide binders and additives such as silica, silica alumina and alumina gels and sols as well as clay such as kaolin.

The preparation of the catalysts involves combining molecular sieve, bayerite, and/or eta alumna and the desired matrix components, such as clay and/or inorganic oxide binders, into an aqueous slurry, and forming the slurry into catalysts particles of desired size. To obtain fluid catalytic cracking catalysts (FCC) the slurry is spray dried to obtain particles having a size range from 20 to 140 microns. Procedures that may be used in the practice of the invention are disclosed in US 3,957,689, 4,126,579, 4,226,743, 4,458,023 and Canadian patent 967,136.

The hydrocarbon feedstocks that are used typically contain from 2 to 10 ppm and as much as 15 ppm nickel. These feedstocks include gas-oils which have a boiling range at from 340 to 565°C as well as residual feedstocks and mixtures thereof.

The catalytic cracking process is conducted in conventional FCC units wherein reaction temperatures the range of from 400 to 700°C and regeneration temperatures are from 500 to 850°C are utilized. The catalyst; i.e. inventory, is circulated through the unit in a continuous reaction/regeneration process during which nickel is deposited on the catalyst. The catalyst inventory is maintained at a nickel level of preferably from 300 to 2500 ppm and in some instances as high as 3000 to 8000 ppm by the addition of fresh catalyst and removal of equilibrium catalyst. During use, some of the bayerite may be converted to eta alumina at reaction temperatures employed during the catalytic cracking process. As indicated in the literature bayerite can be converted to eta alumina by heating to temperatures in excess of about 250°C. It is observed that at the equilibrium nickel levels described above the quantity of coke and hydrogen (C + H₂) (as measured in a pilot plant) will remain within acceptable levels i.e. from about 3 to 6 wt.% C and from about 0.3 to 0.8 wt.% H₂ based on the weight of fresh feed processed.

The bayerite used to prepare the catalysts can be obtained by processes described in U.S. Patent 3,092,454. If it is desired to convert the Bayerite to eta alumina prior to incorporation in the catalyst, the Bayerite is heated to a temperature of from about 250 to 400°C for a period of 0.5 to 2 hours. Commercially available bayerite aluminas such as Versal B from La Roche Chemical Inc., Baton Rouge, LA having a bayerite phase purity of 95 wt.% and Alcoa C-37 having a bayerite phase purity of greater than 80% are particularly suited for use in the present invention.

Having described the basic aspects of the invention the following examples are given to illustrate specific embodiments.

### Example 1 Catalyst A (Comparison)

A mixture containing 5195 g of (NaY), 2806 g of VFA (a pseudo-boehmite available from the Davison Chemical Division of W. R. Grace and Co. - Conn.) and 7920 g of H₂O was milled to micron size in a colloid mill, diluted with kaolin clay and 8000 g silica sol (prepared from sodium silicate and H₂SO₄) and spray dried. The catalyst, which had a formulation of 20% NaY, 20% Al₂O₃ 20% SiO₂ and 40% clay, was successively ion-exchanged with a 3 wt.% solution of ammonium sulfate and a rare earth chloride solution. The catalyst was calcined for 2 hours at 538°C (1000°F). During calcination, the pseudo-bohemite was converted to gamma-alumina.

### Example 2 Catalyst B (Invention)

A catalyst identical in formulation to Catalyst A was prepared. The only exception was that a bayerite (Versal B from La Roche Chemical) was used in place of the pseudo-boehmite. During calcination, some of the bayerite transformed to eta-alumina.

### Example 3 Evaluation

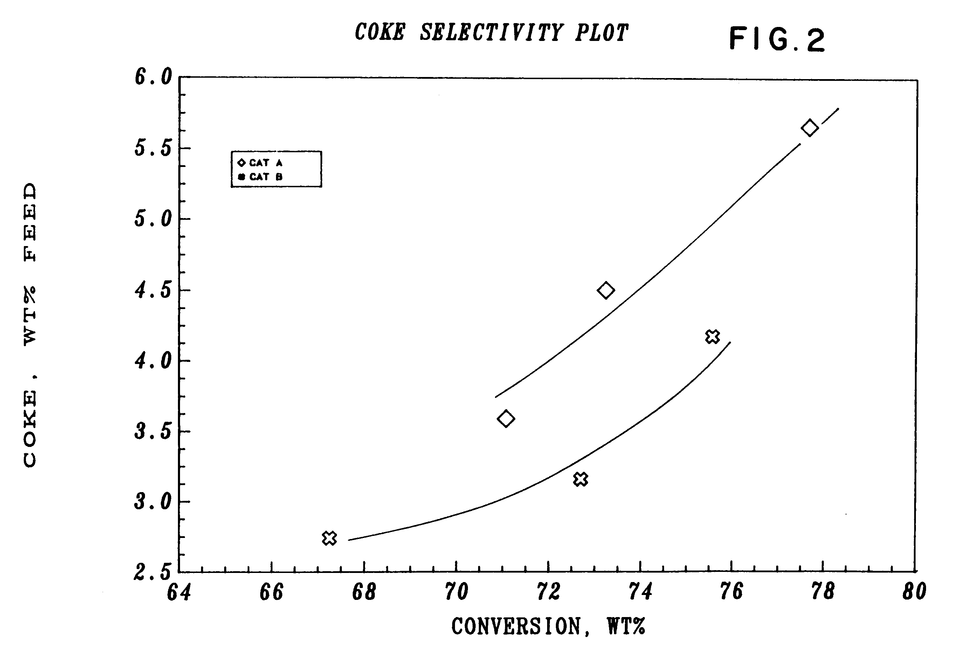

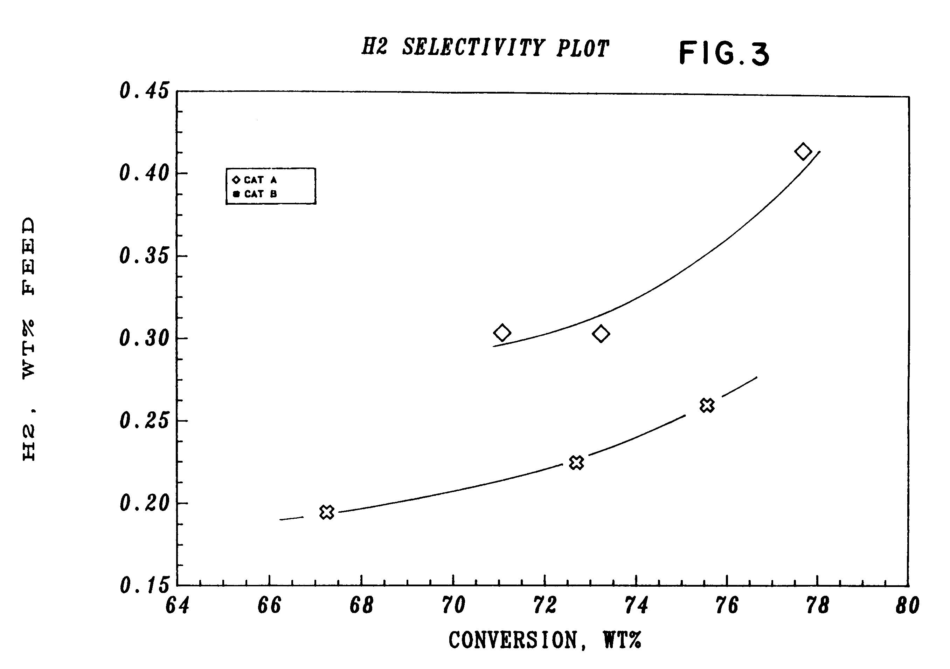

Catalysts A and B were impregnated with nickel naphthenate to about 3000 ppm Ni and deactivated for 6 hours at 732°C (1350°F) in flowing steam at 2 atmosphere pressure. Properties of Catalysts A and B are shown in Table I. The nickel-impregnated and steamed catalysts were used to crack a West Texas heavy gas oil at 500°C 930°F and a contact time of 75 seconds. The results are shown graphically in Figures 1, 2, and 3. At a constant conversion, Catalyst B of the invention (with eta-alumina) produced significantly lower levels of coke and hydrogen than comparison Catalyst A (with gamma-alumina). In particular: Figure 1 shows that Catalyst A is more active than Catalyst B by 1 to 2 microactivity numbers; Figure 2 shows that the catalyst of the present invention, Catalyst B, made about 20% less coke than the Catalyst A; and Figure 3 shows that Catalyst B made about 30% less hydrogen than Catalyst A.

**Table I**

| PROPERTIES | | |
|---|---|---|
| Catalyst Alumina Type | Catalyst A pseudo-boehmite | Catalyst B bayerite |
| | | |

| Chemical Properties (Wt.%) | | |
|---|---|---|
| Cl | <.01 | <.01 |
| RE₂O₃ | 2.81 | 2.71 |
| Na₂O | 0.79 | 0.84 |
| Al₂O₃ | 41.2 | 41.0 |
| SO₄ | 1.68 | 0.5 |

| Physical Properties (Fresh) | | |
|---|---|---|
| Davison Attrition Index | 4 | 2 |
| Bulk Density/g cm⁻³ | 0.75 | 0.78 |
| Average Particle Size | 63 | 74 |
| BET Surface Area/m²g⁻¹ | 214 | 219 |

| Nickel Content and Physical Properties after Steaming | | |
|---|---|---|
| ppm Ni | 3074 | 3157 |
| pk. ht. (mm) | 33 | 28 |
| Zeolite Unit Cell/Å | 24.48 | 24.40 |
| Zeolite SA/m²g⁻¹ | 59 | 63 |
| Matrix SA/m²g⁻¹ | 57 | 50 |

The above examples illustrate that valuable nickel tolerant FCC catalysts may be prepared and used in accordance with the teachings of the present invention.

## Claims

1. A catalytic cracking catalyst composition which comprises from 5 to 50 wt.% molecular sieve and from 2 to 40 wt.% bayerite and/or eta alumina, said catalyst being further characterized by having deposited thereon in excess of about 300 ppm Ni.

2. The composition of claim 1 which contains from 2 to 40 wt.% bayerite and/or eta alumina, from 5 to 50 wt.% synthetic faujasite, from 10 to 60 wt.% clay, and from 10 to 30 wt.% of an inorganic oxide binder selected from the group consisting of silica, alumina and silica-alumina, hydrogels and sols.

3. A method for catalytically cracking Ni containing hydrocarbon feedstocks which comprises
(a) reacting a hydrocarbon which contains in excess of about 2 ppm Ni under catalytic cracking conditions in the presence of a catalytic cracking catalyst that contains 5 to 50 wt.% molecular sieve and at least 2 wt.% bayerite and/or eta alumina, and
(b) continuing said reaction while maintaining a catalyst inventory which includes from about 300 to 8000 ppm nickel which is deposited on said catalyst during the cracking reaction.

4. The method of claim 3 wherein the cracking reaction is conducted at at temperature of 400 to 700°C.

## Patentansprüche

1. Katalytische Crackkatalysatorzusammensetzung, die 5 bis 50 Gew.-% Molekularsieb und 2 bis 40 Gew.-% Bayerit und/oder eta-Aluminiumoxid enthält, wobei der Katalysator außerdem dadurch gekennzeichnet ist, daß auf ihm mehr als etwa 300 ppm Ni abgeschieden sind.

2. Zusammensetzung nach Anspruch 1, welche 2 bis 40 Gew.-% Bayerit und/oder eta-Aluminiumoxid, 5 bis 50 Gew.-% synthetischen Faujasit, 10 bis 60 Gew.-% Ton und 10 bis 30 Gew.-% eines anorganischen Oxidbindemittels ausgewählt aus der Gruppe bestehend aus Siliciumoxid-, Aluminiumoxid-, Siliciumoxid/Aluminiumoxid-Hydrogelen und -solen enthält.

3. Verfahren zum katalytischen Cracken Nickel enthaltender Kohlenwasserstoff-Einsatzmaterialien, bei dem
a) ein Kohlenwasserstoff, der mehr als 2 ppm Nickel enthält, unter katalytischen Crackbedingungen in Gegenwart eines katalytischen Crackkatalysators, der 5 bis 50 Gew.-% Molekularsieb und mindestens 2 Gew.-% Bayerit und/oder eta-Aluminiumoxid enthält, zur Reaktion gebracht wird und
b) die Reaktion unter Aufrechterhaltung eines Katalysator-Materialbestandes weitergeführt wird, welcher 300 bis 8000 ppm während der Crackreaktion auf dem Katalysator abgeschiedenes Nickel aufweist.

4. Verfahren nach Anspruch 3, bei dem die Crackreaktion bei einer Temperatur von 400 bis 700° C durchgeführt wird.

## Revendications

1. Composition d'un catalyseur de craquage catalytique qui contient 5 à 50% en poids de tamis moléculaires et 2 à 40% en poids de bayérite et/ou d'êta alumine, ledit catalyseur étant de plus caractérisé en ce que plus de 300 ppm de Ni y sont déposés.

2. Composition de la revendication 1 qui contient 2 à 40% en poids de bayérite et/ou d'êta alumine, 5 à 50% en poids de faujasite synthétique, 10 à 60% en poids d'argile et 10 à 30% en poids d'un liant d'oxyde inorganique choisi dans le groupe consistant en silice, alumine et aluminosilicate, hydrogels et sols.

3. Méthode pour le craquage catalytique de charges d'alimentation d'hydrocarbures contenant Ni qui comprend :
(a) la réaction d'un hydrocarbure qui contient un excès d'environ 2 ppm de Ni en conditions de craquage catalytique, en présence d'un catalyseur de craquage catalytique qui contient 5 à 50% en poids de tamis moléculaires et au moins 2 portions en poids de bayérite et/ou d'êta alumine et
(b) la continuation de ladite réaction tout en maintenant un stock du catalyseur qui comprend environ 300 à 8 000 ppm de nickel qui se dépose sur ledit catalyseur pendant la réaction de craquage.

4. Méthode de la revendication 3, où la réaction de craquage est entreprise à une température de 400 à 700°C.
